# EUROPÄISCHE PATENTANMELDUNG

(11) **EP 0 620 358 A1**
(43) Veröffentlichungstag der Anmeldung: **19.10.1994**
(21) Anmeldenummer: 94105607.9
(22) Anmeldetag: 12.04.1994
(51) Int. Cl.: F01B 13/06, F04B 1/04

(54) **Hydraulikmotor**

(30) Priorität: 13.04.1993 DE 4311997
(71) Anmelder: SAUER-SUNDSTRAND GMBH & CO., D-24539 Neumünster-Wittorf (DE)
(72) Erfinder: Grahl, Thomas, Dr.-Ing., D-24534 Neumünster (DE)
(74) Vertreter: Altenburg, Udo, Dipl.-Phys.

(57) **Zusammenfassung**

Es wird ein Druckmittelaggregat, insbesondere Hydraulikmotor oder Hydraulikpumpe, mit einem feststehenden Gehäuse, Rotor und Stator und Lagerung des Rotors gegenüber dem Stator vorgeschlagen, wobei die Bauteile um eine geometrische Achse drehbar und in dieser Achsrichtung zueinander fixiert sind. Dabei sind die hydraulischen Trennkräfte zwischen Zylinderblock und Steuerorgan (20) hydraulisch kompensierbar. Es sind druckbeaufschlagte, an der bezüglich der geometrischen Achse zugewandten Seite angeordnete ringförmige Flächen (23a,23b) an dem Steuerorgan vorgesehen, welche Ringräume in axialer Richtung begrenzen, die zwischen dem Steuerorgan und einem angrenzenden Gegenstück (25) gebildet sind. Somit wird dieses Gegenstück (25) gegen die Wirkung der Trennkräfte gehalten, ist am Rotor befestigt und läuft mit diesem um.

## Beschreibung

Die Erfindung betrifft ein Druckmittelaggregat, insbesondere einen Hydraulikmotor oder eine Hydraulikpumpe nach dem Oberbegriff des Anspruches 1.

Ein solches Druckmittelaggregat besteht aus einem Rotor und einem Stator sowie einer Lagerung des Rotors gegenüber dem Stator, wobei diese Bauteile um eine geometrische Achse angeordnet sind und in dieser Achsrichtung zueinander fixiert sind, ferner aus einem Nockenring, der mit dem Stator verbunden ist, einem Zylinderblock als Bestandteil des Rotors, in dem sich im wesentlichen radial angeordnete Zylinderbohrungen befinden und Kolben, die verschiebbar in den Zylindern angeordnet sind und über Rollen an dem Nockenring abgestutzt werden.

Solche Aggregate sind beispielsweise aus der DE 38 34 878 A1 bekannt. Diese bekannten Aggregate wie Pumpen oder Motoren sind Gegenstand ständiger Forschung im Hinblick auf eine Reduzierung ihres sowohl radialen als auch axialen Platzbedarfes. Die male Ausdehnung des Aggregates wird zu einem großen Teil durch die Lagerung bestimmt, so daß die Aktivitäten sich insbesondere diesem Bereich widmen und Lagerungen in vielfältigen Konfigurationen entwickelt wurden. Hierbei ist immer sowohl die radiale als auch die male Abstützung gleichzeitig sicherzustellen. Die radiale Komponente entsteht im wesentlichen durch von außen auf den Mechanismus wirkende Kräfte, axiale Komponenten jedoch auch durch innere systembedingte Kräfte.

Die axial auf die Lagerung wirkenden Kraftkomponenten entstehen durch die bislang bekannte Anordnung des Steuerorganes, welches die Steuerung der Zylinder mit den beiden Druckseiten des Aggregates ermöglicht.

Der Zylinderblock eines Druckmittelaggregates enthält mehrere Einzelzylinder, die radial innerhalb des Trägers angeordnet sind. Die Zylinder sind auf der der geometrischen Drehachse zugewandten Seite mit jeweils einer im wesentlichen in Achsrichtung verlaufenden Leitung verbunden, wobei die Öffnungen aller den einzelnen Zylindern zugeordneten Leitungen bezüglich deren Mittelachse auf einem gemeinsamen Teilkreis an der Stirnseite des Zylinderblocks liegen. Auf der Stirnseite ist die Steuerfläche des Zylinderblocks von der des Verteilers separiert, welche die genannten Öffnungen enthält.

In sinngemäß gleicher Weise ist die entsprechende Steuerfläche des mit dem Stator verbundenen Steuerorgans ausgeführt, wobei hier jedoch die Anzahl der Bohrungen gleich der doppelten Zahl der auf dem Nockenring ausgeführten Hubkurven ist. Innerhalb des tubusförmigen Steuerorganes sind die genannten Bohrungen im wesentlichen in Achsrichtung ausgeführt. Die Bohrungen münden auf der der Steuerfläche abgewandten Seite wechselweise in Ringnuten, die auf der Außenseite in das Steuerorgan eingebracht sind und mit den Druckanschlüssen des Druckmittelaggregates in Verbindung stehen.

Die Steuerflächen des rotierenden Zylinderblocks und des feststehenden Steuerorgans liegen aufeinander. Bei Druckbeaufschlagung des Mechanismus entsteht zwischen Zylinderblock und Steuerorgan eine hydraulische Trennkraft, welche Zylinder und Steuerorgan voneinander zu trennen bestrebt ist. Um das Steuerorgan auf dem Zylinderblock zu halten, wird bei den bekannten Anordnungen eine Kraft hydraulisch erzeugt, welche der genannten Trennkraft entgegenwirkt und dadurch das Steuerorgan auf dem Zylinderblock hält. Die hydraulische Kraft entsteht bei den bekannten Anordnungen dadurch, daß das Steuerorgan auf dem Außendurchmesser jeder Ringnut in Stufen abgesetzt ist, wobei die Stufen so groß bemessen sind, daß die Summe der Kräfte, hier als Kompensationskraft bezeichnet, die sich aus dem Produkt aus den sich ergebenden Ringflächen, gekennzeichnet durch die Durchmesser aneinandergrenzender Stufen, und dem Druck innerhalb der Ringnuten, etwa der Größe der Trennkraft zwischen Zylinderblock und Steuerorgan ist. Das Verhältnis der Trennkraft zur Kompensationskraft wird nicht exakt spezifiziert, da die Kompensationskraft auch durch mechanische Kräfte, wie zum Beispiel Federkräfte zusätzlich unterstützt werden kann und somit nicht notwendigerweise größer als die Trennkraft sein muß.

Die aus den abgesetzten Stufen am Steuerorgan resultierende Kompensationskraft erzeugt bei den bekannten Anordnungen mit rotierendem Zylinderblock eine Reaktionskraft, welche auf den Stator des Druckmittelaggregates wirkt, die in gleicher Höhe, aber in entgegengesetzter Richtung von der Lagerung des Rotors gegenüber dem Stator aufgefangen werden muß.

Aufgabe der Erfindung ist es, ein Druckmittelaggregat der eingangs umrissenen Art anzugeben, durch welches die systembedingte axiale Kraftkomponente in großem Maße verringert werden kann und eine kleiner dimensionierte und damit weniger Bauraum beanspruchende Lagerung möglich ist, ohne dabei technisch aufwendige Mittel vorsehen zu müssen.

Diese Aufgabe wird erfindungsgemäß durch die im Anspruch 1 angegebenen Merkmale gelöst.

Erfindungsgemäß liegen die abgesetzten Stufen am Steuerorgan des Aggregates nicht auf dessen Außenseite - bezogen auf die geometrische Achse -, sondern auf dessen Innenseite, so daß die Reaktionskraft auf ein entsprechend den Stufen geformtes Gegenstück geleitet wird, welches gegenüber dem Rotor rotatorisch und in Achsrichtung fixiert ist, und damit die genannte Reaktionskraft, welche auf die Lagerung wirkt, vermieden werden kann; der Kraftschluß erfolgt innerhalb des Rotors.

Die Abdichtung zwischen dem mit dem Stator verbundenen Steuerorgan und dem mit dem Rotor verbundenen Gegenstück erfolgt vorzugsweise über metallische oder nicht-metallische Dichtringe.

Die Erfindung gilt sinngemäß auch für solche Aggregate, die mit umschaltbaren Hubvolumina ausgeführt sind und über Steuerorgane verfügen, welche mit vorzugsweise mehr als zwei Ringnuten ausgeführt sind.

Zweckmäßige Weiterbildungen des erfindungsgemäßen Druckmittelaggregats als Hydraulikmotor oder Hydraulikpumpe ergeben sich aus den Ansprüchen 2 bis 6.

Nachfolgend wird die Erfindung an Ausführungsbeispielen an Hand der beigefügten Zeichnung näher erläutert. In der Zeichnung zeigen:
- Fig. 1: zwei Teilschnittansichten eines Hydraulikmotors nach einer Ausführungsform,
- Fig. 2: zwei Teilschnittansichten eines Hydraulikmotors mit nichtabgestuftem Ring.

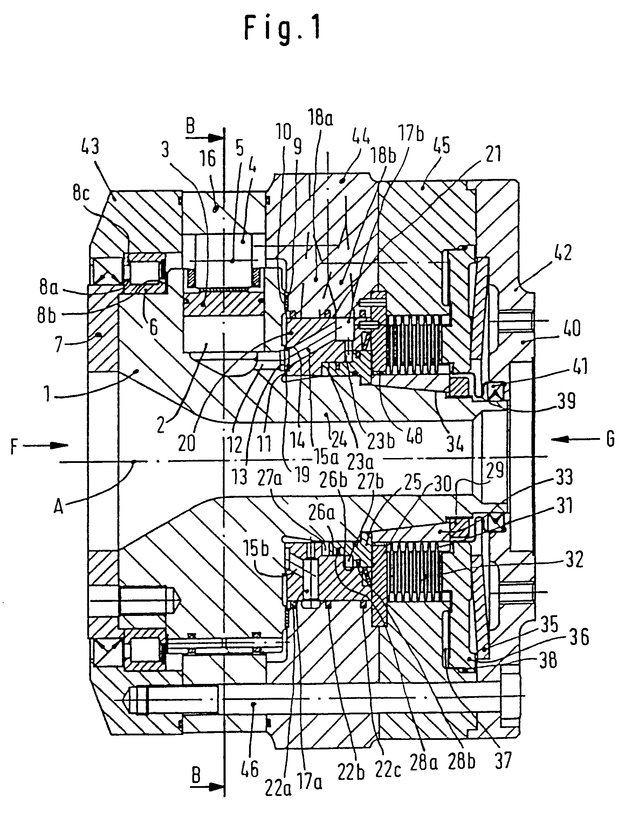

Der in Fig. 1 gezeigte Hydraulikmotor umfaßt ein aus drei Teilen bestehendes Gehäuse 43, 44, 45, wobei diese durch Schrauben 46 und dazwischenliegende Dichtungen zusammengefügt sind, einen Nockenring 16, einen Zylinderblock 1, der unmittelbar über Lager 6 an dem Gehäuseteil 43 fixiert und um eine geometrische Drehachse A drehbar angeordnet ist. Weiterhin befindet sich ein Steuerorgan 20 mit entsprechendem Gegenstück auf dem Rotor. Es sind ebenfalls eine Haltebremse mit Bremsringkolben 36 und Tellerfeder 35 und einen Deckel 40 vorgesehen.

In Fig. 1 befindet sich zwischen den Gehäuseteilen 43, 44 ein Nockenring 16.

In dem Zylinderblock 1 sind radial versetzt angeordnete Zylinderbohrungen 2 vorgesehen, die bezüglich des Umfanges des Zylinderblockes 1 in gleichen Winkelschritten gegeneinander versetzt sind. In den Zylinderbohrungen 2 sind je ein Kolben 3 verschiebbar angeordnet. Die bezogen auf die geometrische Achse A des Aggregates radial außen liegenden Kolbenenden sind mit Rollen 4 versehen, deren Achsen 5 parallel zur geometrischen Achse A verlaufen.

Die Rollen 4 stützen sich auf dem Nockenring 16 ab, welcher um den Zylinderblock 1 herum angeordnet ist. Entlang des Umfanges enthält der Nockenring auf der dem Zylinderblock zugewandten Seite mehrere Hubkurven, durch welche bei Drehung der Maschine die Hubbewegung der Kolben generiert wird.

Der Zylinder 2 ist radial nach außen durch einen Gehäusering 16 abgeschlossen, an dessen Innenseite die Rolle 4 anliegt.

Auf der einen Seite des Zylinderblockes 1 ist dieser mit einer Verlängerung ausgestattet, auf der das Wälzlager 6 vorgesehen ist. Hierbei ist der Innenring des Wälzlagers über die Rückhaltung 7 auf der Verlängerung des Zylinderblocks 1 angebracht. Die Wälzkörper des Lagers sind über Vorsprünge 8a, b an dem Innenring bezüglich der geometrischen Achse A axial fixiert. Auf dem Außenring ist ein Vorsprung 8c nur in einer Richtung vorhanden, nämlich so, daß der Zylinderblock 1 nicht zur Flanschseite F bewegt werden kann. Die entsprechend erforderliche Fixierung in der anderen Achsrichtung befindet sich auf der der Verlängerung des Zylinderblockes 1 gegenüberliegenden Seite und umfaßt eine Gleitscheibe 9, die aus einem nichtmetallischen Werkstoff besteht, am Stator fixiert ist und gegen eine Planfläche 10 am Zylinderblock 1 läuft. Als zusätzliche Abstützung kann ein Lagerring 48 vorgesehen sein.

Auf der der Verlängerung gegenüberliegenden Seite des Zylinderblockes 1 befindet sich die Steuerfläche 11 des Zylinderblockes 1. Diese ist plan ausgeführt, wobei die Planfläche 10 in einer senkrecht zur geometrischen Achse A befindlichen Ebene angeordnet ist. Die Zylinderbohrungen 2 sind über Leitungen 12 mit der Steuerfläche 11 verbunden, wobei eine Leitung pro Zylinder 2 vorgesehen ist. Die Leitungen auf dieser Fläche 11 münden in regelmäßig auf einem gleichen, auf der geometrischen Achse A zentrierten Kreis angeordneten Öffnungen 13.

Auf der planen Steuerfläche 11 des Zylinderblockes 1 ist eine Steuerfläche 14 des Verteilers 20 angeordnet, die in einer ähnlichen Weise wie die des Zylinderblockes 1 ausgeführt ist. Innerhalb des Verteilers 20 befinden sich Leitungen 15a, b, die näherungsweise parallel zu der geometrischen Achse A des Aggregates angeordnet sind. Die Anzahl der Leitungen richtet sich nach der Zahl der Hubkurven, die über den Umfang verteilt auf dem Nockenring angeordnet sind, und zwar sind je zwei Leitungen je vollständiger Hubkurve, d.h. vom oberen bis zum unteren Totpunkt reichend, vorgesehen. Auf der Außenseite des Verteilers 20 sind Ringnuten 17a, b eingebracht, die über in dem Stator vorgesehene Leitungen 18a, b mit den Anschlüssen des Aggregates in Verbindung stehen. Die Leitungen 15a, b je Hubkurve, die innerhalb des Verteilers 20 angeordnet sind, sind so geführt, daß sie einerseits in auf der Planfläche 10 befindliche Öffnungen 19 münden und andererseits mit den Ringnuten 17a, b des Verteilers 20 in Verbindung stehen, nämlich eine Leitung 15a mit der einen Ringnut 17a, die andere Leitung 15b mit der zweiten Ringnut 17b. Die beiden Ringnuten 17a, b befinden sich auf einer zylinderförmigen Fläche 21, die hinsichtlich der geometrischen Achse A zentriert und in einer entsprechenden Aufnahme des Stators eingebracht ist, wobei über zwischen Stator und Verteiler 20 liegende Dichtelemente 22a,b,c die Ringnuten 17a,b gegeneinander abgedichtet sind. Dabei ist der Verteiler 20 gegenüber dem Stator axial verschiebbar gehalten, jedoch bezüglich einer Drehung um die geometrische Achse A über den Lagerring gegenüber dem Stator fixiert.

Auf dem inneren Durchmesser des näherungsweise einen Tubus bildenden Verteilers 20 befinden sich zwei voneinander abgesetzte Stufen, so daß zwei separate Ringflächen 23a, b mit unterschiedlichen Durchmessern vorhanden sind.

Auf seiner Gegenflanschseite G weist der Zylinderblock 1 eine rohrförmige Verlängerung 24 auf, die den Innendurchmesser des tubusförmigen Verteilers 20 durchdringt. Auf dieser Verlängerung ist ein auf dem Außendurchmesser abgesetzter Ring 25 aufgebracht. Dieser mit dem Zylinderblock 1 umlaufende Ring 25 besitzt auf dem Außendurchmesser zwei Stufen 26a, b, die den Durchmessern des Verteilers 20 auf der Innenseite entsprechen. Der Ring ist in den Verteiler 20 eingeschoben, so daß zwei Ringräume 27a,b gebildet sind. Diese Ringräume sind gegeneinander über Dichtelemente 28a, b abgedichtet und stehen mit den paarweise einer Hubkurve zugeordneten Leitungen 18a, b innerhalb des Verteilers 20 in Verbindung. Dadurch, daß die paarweisen Bohrungen mit den äußeren Ringnuten 17a,b,c,d des Verteilers verbunden sind, stehen die zwischen dem umlaufenden Ring 25 und dem Verteiler 20 gebildeten Ringräume mit den Druckanschlüssen des Motors in Kontakt, wobei diese im Betrieb des Aggregates auf jeweils einem höheren und einem niedrigeren Druck stehen. Dieser Druck wirkt auf die Ringflächen des Verteilers 20 und erzeugt dort eine Kraft, welche den Verteiler 20 in Richtung zur Steuerfläche 11 des Zylinderblockes 1 verschiebt. Die Größe der Ringfläche und die sich daraus ergebende Kraft wird gerade so groß gestaltet, daß die zwischen den aufeinanderliegenden Steuerflächen von Zylinderblock 1 und Verteiler 20 sich ergebende hydrostatische Trennkraft so kompensiert wird, daß die hydrostatiscxhe Trennkraft um soviel kleiner ist, daß der Verteiler 20 nicht vom Zylinderblock 1 abgehoben wird. Die auf den abgesetzten Ring 20 wirkende Reaktionskraft wird über eine Wellenmutter 29 abgefangen. Zusätzlich wird der Verteiler 20 über eine Feder 30 vom Stator gegen den Zylinderblock 1 gedrückt, so daß im drucklosen Zustand der Zylinderblock 1 und der Verteiler 20 aufeinanderliegen.

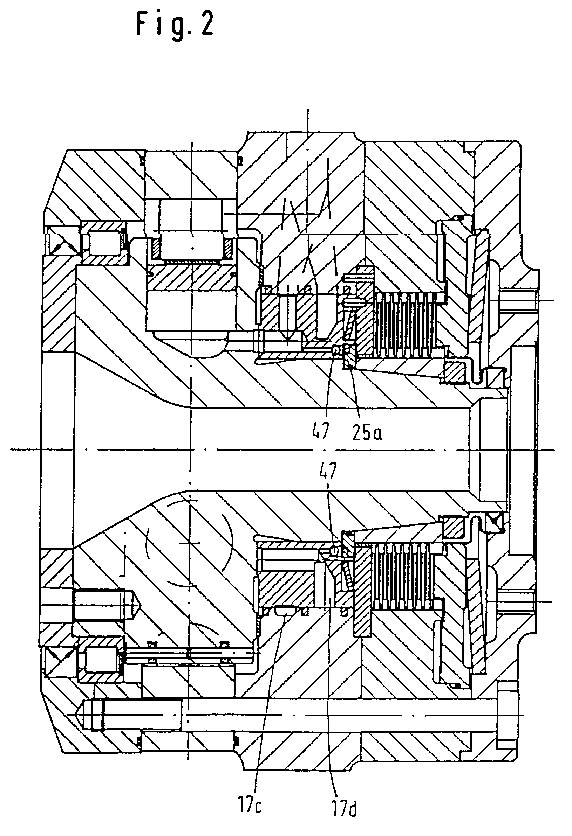

Eine weitere Ausführungsform ist in Fig. 2 gezeigt, bei welcher der abgestufte Ring 25 durch einen nicht abgestuften Ring 25a ersetzt ist. Hierdurch entsteht zwischen dem Verteiler 20 und dem Ring 25 nur eine Ringkammer, welche über ein Wechselventil 47 mit den Leitungen 17c, d verbunden ist. Durch das Wechselventil 47 wird erreicht, daß jeweils der höhere der in den Leitungen 17c, d befindliche Druck in dem zwischen Ring 25 und Verteiler 20 gebildeten Ringraum wirkt und durch die resultierende Kraft die zwischen den Steuerflächen 14, 11 von Verteiler 20 und Zylinderblock 1 entstehende Trennkraft kompensiert.

An der Gegenflanschseite G des Aggregates ist eine Lamellenbremse angebracht, bei der die auf dem Rotor befindliche Verzahnung 31 der Lamellen 32 über eine Hülse 33, die auf der Innenseite mittels eines Konus 34 fixiert ist, der seinerseits über die Wellenmutter 29 gehalten wird, auf dem Rotor angebracht ist. Bei nicht druckentlasteter Bremse werden die Bremslamellen 32 durch die Tellerfeder 35 über den Ringkolben 36 gegeneinandergedrückt, wodurch die Bremswirkung entsteht. Wird der Druckraum 37 der Bremse mit einem Lösedruck beaufschlagt, wird der Ringkolben 36 gegen die Wirkung der Tellerfeder 35 zur Gegenflanschseite G des Aggregates verschoben, und die Bremswirkung der Lamellen 32 aufgehoben. Die Dichtung des Ringkolbens 36 erfolgt am äußeren Durchmesser durch einen Rundschnurdichtring 38 und auf dem inneren Durchmesser durch eine metallische oder nichtmetallische Membran 39, die einerseits auf dem inneren Durchmesser des Ringkolbens 36 befestigt ist, andererseits mit dem gegenflanschseitigen Deckel 40 des Aggregates verbunden ist. In dem Deckel 40 befindet sich eine Wellendichtung 41 bekannter Ausführung, welche zu der rohrförmigen Verlängerung des Zylinderblockes 1 eine Abdichtung herstellt. Die Membran ist dabei so flexibel, daß sie den Bewegungen des Ringkolbens 36 folgen kann und somit die die eigentliche Abdichtung darstellende Wellendichtung keiner Verschiebung auf dem Rotor unterliegt.

Das Aggregat wird auf der Gegenflanschseite G abgeschlossen durch den Deckel 40, welcher mittels eines genormten Aufnahmeflansches 42 so ausgeführt ist, daß er zur Aufnahme anderer Druckmittelaggregate geeignet ist.

Der Zylinderblock 1 ist, bezogen auf die geometrische Achse A, insgesamt hohl ausgeführt. Die Funktion des Hydraulikmotors ist herkömmlicher Art. Während z.B. in der Leitung 17a das unter höherem Druck stehende Fluid und in der Leitung 17b das unter niedrigerem Druck stehende Fluid transportiert werden, erfolgt eine relative Drehung des Zylinderblockes 1 gegenüber dem Stator entsprechend einer ersten Drehrichtung. Wechselt die Zuordnung der Drücke bezüglich der Leitungen, erfolgt eine relative Drehung in der zweiten entgegengesetzten Drehrichtung.

Der Vorteil der beschriebenen Anordnung liegt darin, daß die Reaktionskräfte, die sich aus der an sich bekannten Art der Kompensation ergeben, über einen Krafrtschluß innerhalb des Rotors geführt werden. Bei herkömmlichen Ausführungen erfolgt der Kraftschluß vom Rotor über den Stator, so daß die Kraft über die Lagerung geführt werden muß. Diese Kräfte stehen je nach Druckbeaufschlagung des Mechanismus in einem nicht vernachlässigbaren Verhältnis zu den von außen auf den Rotor einwirkenden Kräften und erfordern von daher eine entsprechend groß dimensionierte legerung. Bei Anwendung der beschriebenen Erfindung kann eine demgemäß geringer dimensionierte Lagerung verwendet werden, wodurch Bauraum und Kostenvorteile entstehen.

Das beschriebene Konzept ist nicht auf die beschriebenen Ausführungsformen begrenzt, sondern gilt insbesondere auch für Aggregate mit umschaltbarem Hubvolumen, bei denen der Verteiler mehr als zwei Ringnuten besitzt, wobei die vorstehend beschriebene Kraftkompensation sinngemäß übertragen werden kann.

## Patentansprüche

1. Druckmittelaggregat, insbesondere Hydraulikmotor oder Hydraulikpumpe, mit einem feststehenden Gehäuse, umfassend einen Rotor und einen Stator und eine Lagerung des Rotors gegenüber dem Stator, wobei diese Bauteile um eine geometrische Achse (A) drehbar angeordnet und in dieser Achsrichtung zueinander fixiert sind, und wobei die hydraulischen Trennkräfte zwischen einem Zylinderblock und einem Steuerorgan hydraulisch kompensierbar sind, dadurch **gekennzeichnet,** daß druckbeaufschlagte, an der bezüglich der geometrischen Achse (A) zugewandten Seite angeordnete ringförmige Flächen (23a, 23b) an dem Steuerorgan (20)vorgesehen sind, welche Ringräume in axialer Richtung begrenzen, die zwischen dem Steuerorgan (20) und einem angrenzenden Gegenstück (25) gebildet sind, so daß dieses Gegenstück (25) gegen die Wirkung der Trennkräfte gehalten wird, und daß das Gegenstück (25) am Rotor befestigt ist und mit diesem umläuft.

2. Druckmittelaggregat nach Anspruch 1, dadurch gekennzeichnet, daß die Lagerung des Rotors gegenüber dem Stator aus der Kombination eines Wälzlagers und mindestens eines Gleitlagers besteht.

3. Druckmittelaggregat nach einem der Ansprüche 1 oder 2, dadurch gekennzeichnet, daß das Steuerorgan (20) auf der der Zylinderbohrung (2) abgewandten Seite eine Bremskammer abschließt.

4. Druckmittelaggregat nach einem der Ansprüche 1 bis 3, dadurch gekennzeichnet, daß eine an dem Stator befindliche Verzahnung (31) der Bremslamellen (32) einen Konusring (34) als Klemmadapter aufweist.

5. Druckmittelaggregat nach einem der Ansprüche 1 bis 4, dadurch gekennzeichnet, daß die näher zur geometrischen Achse (A) von Rotor und Stator liegende Dichtung des Bremsringkolbens (36) an einem die Bremse abschließenden Flansch (42) befestigt ist, und daß die bei Verschiebung des Bremsringkolbens (36) auftretenden Relativbewegungen zwischen Bremsringkolben (36) und Rotor über ein flexibles metallisches oder nichtmetallisches Formstück (39) ausgeglichen werden.

6. Druckmittelaggregat nach einem der Ansprüche 1 b is 5, dadurch gekennzeichnet, daß nur eine Kompensationsfläche des Steuerorgans (20) über Rückschlagventile (47) angesteuert wird, so daß immer der höhere Druck der Ringnuten (17a,b,c,d) die Trennkraft zwischen Zylinderblock (1) und Steuerorgan (20) kompensiert.
